# EUROPÄISCHE PATENTANMELDUNG

(11) **EP 1 056 146 A1**
(43) Veröffentlichungstag der Anmeldung: **29.11.2000**
(21) Anmeldenummer: 00108070.4
(22) Anmeldetag: 25.04.2000
(51) Int. Cl.: H01M 6/52, H01M 4/36

(54) **Verfahren zum Recycling von Kathodenmassen gebrauchter Lithiumbatterien**

(30) Priorität: 28.05.1999 DE 19924707
(71) Anmelder: MERCK PATENT GmbH, 64293 Darmstadt (DE)
(72) Erfinder: Schmidt, Michael, Dr., 64331 Weiterstadt (DE); Hemmer, Reinhard P., Dr., 89257 Illertissen (DE); Wohlfahrt-Mehrens, Margret, Dr., 89257 Illertissen (DE); Arnold, Gisela, 89077 Ulm (DE); Vogler, Christian, 89075 Ulm (DE)

(57) **Zusammenfassung**

Die Erfindung betrifft ein Verfahren zum Recycling von Elektrodenmaterialien gebrauchter Lithiumbatterien, bei welchem Kathodenmaterialien aus der Verbindungsklasse der Lithium-Übergangsmetall-Mischoxide aus entladenen gebrauchten Lithiumbatterien nach Zerkleinerung der Elektrodenbestandteile durch mechanische und extraktive Aufbereitung derselben mit dem Ziel der Entfernung von Anodenbestandteilen und anderen Nebenbestandteilen, wie Binder und andere verarbeitungstechnische Hilfsmittel und anschließender gesteuerter Hochtemperaturbehandlung ohne Hinterlassung thermischer Zersetzungsprodukte zu chemisch identischen Produkten, wie sie zur Herstellung der Batterien eingesetzt werden, wiederhergestellt werden können.

## Beschreibung

Die Erfindung betrifft ein Verfahren zum Recycling von Elektrodenmaterialien entladener gebrauchter Lithiumbatterien, bei welchem Kathodenmaterialien aus der Verbindungsklasse der Lithium-Übergangs-Metallmischoxide aus entladenen gebrauchten Lithiumbatterien nach Zerkleinerung der Elektrodenbestandteile durch mechanische und extraktive Aufbereitung derselben mit dem Ziel der Entfernung von Anodenbestandteilen und anderen Nebenbestandteilen, wie Binder und andere verarbeitungstechnische Hilfsmittel und anschließender gesteuerter Hochtemperaturbehandlung ohne Hinterlassung thermischer Zersetzungsprodukte zu chemisch identischen Produkten, wie sie zur Herstellung der Batterien eingesetzt werden, wiederhergestellt werden können.

Der Bedarf an wiederaufladbaren Lithiumbatterien ist hoch und wird in Zukunft noch sehr viel stärker ansteigen. Die Gründe hierfür sind die hohe erzielbare Energiedichte und das geringe Gewicht dieser Batterien. Anwendung finden diese Batterien in Mobiltelefonen, tragbaren Videokameras, Laptops etc.

Der Einsatz von metallischem Lithium als Anodenmaterial führt bekanntermaßen wegen der Dentritenbildung beim Auflösen und Abscheiden des Lithiums zu einer ungenügenden Zyklenfestigkeit der Batterie und zu einem erheblichen Sicherheitsrisiko (interner Kurzschluß) (J. Power Sources, 54 (1995) 151).

Die Lösung dieser Probleme geschah durch Ersatz der Lithiummetall-Anode durch andere Verbindungen, die reversibel Lithiumionen interkalieren können. Das Funktionsprinzip der Lithium-Ionen-Batterie beruht darauf, daß sowohl die Kathoden- als auch die Anodenmaterialien Lithiumionen reversibel interkalieren können. D. h. beim Laden wandern die Lithiumionen aus der Kathode, diffundieren durch den Elektrolyten und werden in der Anode interkaliert. Beim Entladen läuft derselbe Prozeß in umgekehrter Richtung ab.

Aufgrund dieser Funktionsweise werden diese Batterien auch 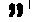 Rocking-chair" oder Lithium-Ionen-Batterien genannt.

Die resultierende Spannung einer solchen Zelle wird bestimmt durch die Lithium-Interkalationspotentiale der Elektroden. Um eine möglichst hohe Spannung zu erreichen, muß man Kathodenmaterialien, die Lithiumionen bei sehr hohen Potentialen und Anodenmaterialien, die Lithiumionen bei sehr niedrigen Potentialen (vs. Li/Li⁺) interkalieren, verwenden. Kathodenmaterialien, die diesen Anforderungen genügen, sind LiCoO₂ und LiNiO₂, welche eine Schichtstruktur aufweisen, und LiMn₂O₄, welches eine kubische Raumnetzstruktur besitzt. Diese Verbindungen deinterkalieren Lithiumionen bei Potentialen um 4V (vs Li/Li⁺). Bei den Anodenverbindungen erfüllen bestimmte Kohlenstoff-Verbindungen wie z. B. Graphit die Anforderung eines niedrigen Potentials und einer hohen Kapazität.

Als Elektrolyt werden Mischungen verwendet, die neben einem Leitsalz noch aprotische Lösungsmittel enthalten. Die am häufigsten verwendeten Lösungsmittel sind Ethylencarbonat (EC), Propylencarbonat (PC), Dimethylcarbonat (DMC), Diethylcarbonat (DEC) und Ethylmethylcarbonat (EMC). Obwohl eine ganze Reihe von Leitsalzen diskutiert werden, wird fast ausnahmslos LiPF₆ verwendet.

Kathodenmassen in Akkumulatoren sind funktional aufgebaute Multikomponentenmischungen. Der eigentlichen Aktivmasse, die bei den handelsüblichen Lithiumakkumulatoren aus binären Lithium-Übergangsmetall-Mischoxiden besteht, werden Hilfsstoffe zugesetzt, die sowohl die elektrochemischen Merkmale der Elektroden als auch die verarbeitungstechnischen Eigenschaften beeinflussen.

Zum Einsatz kommen Graphit und technische Kohlen als elektrisch leitende Hilfsstoffe, Polymere (wie z. B. Polyvinylidenfluorid und Butadien-Styrol-Copolymere, sowie chemisch modifizierte Cellulosen) als Binder, welche die Haftung auf einem metallischen Träger verbessern, sowie Mischungsmodifizierer zur Verbesserung der Verarbeitungseigenschaften der Komposit-Mischung.

Darüber hinaus enthält der elektrochemisch wirksame Elektrodenverbund, neben metallischem Trägermaterial (Kupfer- und Aluminiumfolie für Anoden- und Kathodenmasse) noch eine Separatorfolie (Polyalken, vorzugsweise Polypropylen) und als Elektrolyt ein Lösungsmittelgemisch, in dem das Leitsalz gelöst ist.

Die Trennung und Aufbereitung der unterschiedlichen Inhaltsstoffe ist sehr aufwendig. Es werden dazu in der Regel mehrere, technologisch unterschiedliche Verfahrensschritte einbeziehende Aufarbeitungsverfahren angewandt, mit deren Hilfe jedoch in der Regel nur die einzelnen Übergangsmetalle in Form einfacher Salze zurückzugewinnen sind.

Gebraucht wird ein ökonomisches Verfahren, mit dessen Hilfe es gelingt, wertvolles Kathodenrohmaterial aus gebrauchten Lithiumbatterien wiederzugewinnen, ohne den Umweg über Neusynthesen aus durch Aufschlußmethoden oder anderen abbauenden Verfahren gewonnene, gelöste Salze zu gehen.

Zur Rückgewinnung von Metallen aus zur Wiederverwertung vorgesehenen Sekundärrohstoffen allgemeiner Art werden in der Regel Aufschlußverfahren angewandt, bei denen die Metalle in gelöster oder adsorbierter Form einer Wiederverwertung zugeführt werden, wobei die Wiederverwertung nicht in der ursprünglichen Nutzung der Materialien besteht, sondern bei der die wiedergewonnenen Metalle für neosynthetische Verfahren eingesetzt werden.

So wird in US 5443619 ein Verfahren beschrieben, bei dem die interessierenden Metalle durch Extraktion aus wässrigen Lösungen zurückgewonnen werden. Als Wiedergewinnungsverfahren werden auch Auslaugprozesse eingesetzt wie z. B. in US 5364444 beschrieben. Die Wiedergewinnung von wertvollen Metallen aus gebrauchten Katalysatoren durch eine Kombination verschiedener chemische Aufbereitungsschritte und selektiver Extraktion ist in EP 652978 beschrieben.

Die Wiedergewinnung von metallischen Rohstoffen aus Batterien ist ein technologisch relativ neues Gebiet. Für verschiedene Batterietypen sind Aufarbeitungsmethoden beschrieben: So wird z.B. (Progress in Batteries & Battery Materials, 13, (1994), 367 ff) die Wiedergewinnung von Mangan mit einer Kombination von nassen Aufschlußverfahren und einem Röstprozesses beschrieben. In US 5407463 wird die Wiedergewinnung der metallischen Rohstoffe Cadmium, Nickel und Eisen aus Ni/Cd-Batterien durch nassen sauren Aufschluß, Extraktion und naßchemischer Trennung erreicht.

Bei der Behandlung von Lithiumbatterien im allgemeinen und von Lithiumakkumulatoren im besonderen werden, unter Anpassung der Verfahrensschritte an die spezifischen Materialeigenschaften dieser Batterien, ähnliche Arbeitsmethoden zur Stoffwiedergewinnung, insbesondere der enthaltenen Metalle angewandt. So wird in JP 11-6020 und in Hydrometallurgy 47, (1998) 259 ff die extraktive Rückgewinnung von Kobalt mit einer Kombination von elektrochemischen und naßchemischen Methoden aus Lithiumcobaltat-haltigen Batterien beschrieben. Ein weiteres Verfahren zur Rückgewinnung von Rohstoffen aus Lithiumbatterien, ist im Tagungsbericht 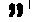 Treatment and Minimization of Heavy Metal containing Wastes"; Proc. Int. Symp. (1995) 257 ff veröffentlicht. Dabei werden Lithium und Mangan in Carbonate umgewandelt. Getrennt davon werden die Metalle Eisen, Nickel und Chrom, durch sauren Aufschluß als gelöste Nitrate zurückgewonnen.

Aufgabe der Erfindung ist es daher, die Wiederverwertung von aus Lithium-Übergangsmetall-Mischoxiden bestehenden Kathodenmassen aus gebrauchten entladenen Lithiumbatterien vorzusehen, welche bei der Herstellung von Lithiumbatterien wiederverwendet werden können.

Die erfindungsgemäße Aufgabe wird gelöst durch ein Verfahren, zur Wiedergewinnung von Kathodenmaterialien aus der Verbindungsklasse der Lithium-Übergangsmetall-Mischoxide aus gebrauchten Lithiumbatterien, umfassend die Schritte:
i) Freilegung des Elektrodenverbundes, umfassend mindestens die Anodeneinheit, die Separatorteile, den Elektrolyten und die Kathodeneinheit,
ii) Extraktion des Eleketrodenverbundes mit einem organischen Lösungsmittel,
iii)Trocknung des extrahierten Elektrodenpacks,
iv)die mechanische Separation der Anodeneinheit aus dem so behandelten Elektrodenverbund
v) Mahlen und Sichten des nach Schritt iv erhaltenen restlichen Elektrodenverbundes
vi)Unterziehen der nach Schritt v erhaltenen Masse einer Hochtemperaturbehandlung bei Temperaturen zwischen 300 und 700°C, unter solchen Bedingungen, daß in den hierbei wiedergewonnenen Kathodenmaterialien im wesentlichen keine thermischen Zersetzungsprodukte zurückbleiben.

Die vorliegende Erfindung betrifft undotierte und dotierte ternäre oder multinäre Mischoxide als Kathodenmaterialien. Ebenso betrifft die vorliegende Erfindung andere Lithium-Interkalations-Verbindungen die für 4V-Kathoden geeignet sind.

Es wurde gefunden, daß durch das erfindungsgemäße Verfahren die selektive Entfernung der Zusatz- und Hilfsstoffe aus dem rezyklierbaren Kathodenmaterial möglich ist.

Außerdem wurde gefunden, daß 1,2-Dimethoxyethan, Dimethylcarbonat, Essigsäureethylester und Aceton besonders gut geeignete Lösungsmittel für die gängigen Leitsalze sind.

Überraschend wurde gefunden, daß durch die geregelte Hochtemperaturbehandlung der Kathodenmasse das Material restrukturiert werden kann.

In wenigen einfachen und technologisch gut beherrschten Vefahrensschritten gelingt es unter Einsparung von Zeit und großen Mengen an Energie ein chemisch und strukturell gleichartiges Kathodenmaterial, wie das ehemals in der Batterie verwendete, wiederzugewinnen.

Es wurde gefunden, daß das wiedergewonnene Material zum Wiedereinsatz in einer gleichartigen Batterie als Zuschlagsstoff zu neuem Kathodenmaterial gut geeignet ist.

Das der Erfindung zugrundeliegende Verfahren gliedert sich in fünf einfache Teilschritte:
i) Freilegung des Elektrodenverbundes
ii) Extraktion des Elektrodenpacks
iii) Trocknung des extrahierten Elektrodenpacks
iv) Mechanische Separation der Anodeneinheit
v) Mahlen und Sichten der Kathodeneinheit mit Separatorfolie
vi) Geregelte Hochtemperaturbehandlung der Kathodenmasse

### i) Freilegung des Elektrodenverbundes

Dazu wird die Einzelzelle an der Kopfseite und am Boden angebohrt oder aufgesägt und die Elektrolytlösung durch Abpressen oder Absaugen oder Auswaschen mit einem geeigneten, das Leitsalz lösende Lösungsmittel unter Vermeidung von Feuchtigkeitszutritt aus dem Gehäuse entfernt.

Danach wird das Elektrodenpaket durch maschinell-mechanische Entfernung des Bodens und des Kopfdeckels mit nachfolgendem Längssägen und Aufbiegen des Hüllgehäuses freigelegt.

Die Elektrodenmasse wird dann mit einer Säge zunächst in gut handhabbare Scheiben geschnitten, die danach noch einmal hälftig und quer zur ersten Schnittrichtung durchgeschnitten werden können. Die Schnittstücke werden unmittelbar danach in ein Bad eines geeigneten, das Leitsalz lösende Lösungsmittel getaucht.

Bereits dort kann, je nach Beschaffenheit der Batteriewerkstoffe durch mechanische Bewegung des Bades sowohl bei Raumtemperatur oder bei einer anderen Temperatur, die aber unter 60°C liegen muß, eine Auflösung des Elektrodenverbundes, eine mechanische Vorsortierung sowie eine Herauslösung des Leitsalzes erfolgen.

### ii) Extraktion des Elektrodenpacks

Die so vorbereiteten Elektrodenstreifen (Gemisch aus Anoden- und Kathodenstreifen sowie Separatorstreifen) werden zusammen, oder nach entsprechender Vorsortierung, mit einem geeigneten, das Leitsalz lösende Lösungsmittel solange extrahiert (z. B. in einer Soxhlet-Apparatur), bis in der Extraktionslösung kein Zersetzungsprodukt des Leitsalzes (z. B. Fluorid aus Lithiumhexafluorophosphat) mehr nachgewiesen werden kann, oder bis eine dem weiteren Verfahren noch zuträgliche Konzentration an Zersetzungsprodukten erreicht oder unterschritten ist.

Besonders gut geeignete Lösungsmittel für gängige Leitsalze, wie LiPF₆, LiBF₄, LiClO₄, LiAsF₆, LiCF₃SO₃, LiN(CF₃SO₂)₂ oder LiC(CF₃SO₂)₃ und deren Mischungen, sind 1,2-Dimethoxyethan, Dimethylcarbonat, Essigsäureethylester und Aceton.

Die zur Extraktion verwendeten Lösungsmittel können unter Berücksichtigung chemischen Eigenschaften des gelösten Leitsalzes bei Bedarf in bekannter Wiese zurückgewonnen und aufgearbeitet werden.

Bei der Extraktion werden in erster Linie Bindermaterialien aus der Elektrodenmasse herausgelöst. Die graphitische Anodenmasse bleibt bei den meisten Batteriearten fest auf der Trägerfolie haften, wohingegen die Kathodenmasse auf der Separatorfolie sowie auf dem Aluminiumleitblech bei dieser Prozedur durch Anquellen gelockert oder sogar abgelöst wird.

Für die weiteren Verarbeitungsschritte ist es unerheblich ob Kathodenaktivmasse noch im lockeren Verbund an den Folien haften bleibt und wieviel der Aktivmasse bereits während der Extraktion von den Trägern abgeschwemmt wird.

### iii) Trocknung des extrahierten Elektrodenpacks

Das extrahierte Elektrodenmaterial wird wahlweise mit oder ohne Trägerfolien, im Vakuum oder nur durch statische Trocknung bei Temperaturen wenig oberhalb des Siedepunktes des verwendeten Extraktionsmittels getrocknet. Das Extraktionslösungsmittel kann bei Bedarf nach bekannten Methoden zurückgewonnen werden.

### iv) Mechanische Separation der Anodeneinheit

Die extrahierten, getrockneten Elektrodenmaterialien werden zur Abtrennung der Anodenmassestreifen einer mechanischen Trennmethode (z.B. Windsichten) unterworfen. Der Abrieb, der bei der Anodenmasseabtrennung anfällt und der hauptsächlich aus Kohlen und Bindern besteht, kann der Kathodenmasse zugefügt werden.

Der überwiegende Teil der pulvrigen oder krümeligen Anodenmasse kann mechanisch, (z. B. durch Mahlen), von den separierten Anodenstreifen abgetrennt werden. Kohlen und Binder können thermisch entsorgt, das Aluminiumleitblech kann danach bekannten Wiederverwertungswegen zugeführt werden.

### v) Mahlen und Sichten der Kathodeneinheit mit Separatorfolie

Die Kathodenmassen, die bei der Extraktion abgespült wurde, sowie das Material, das noch an Separatorfolie und Aluminiumleitblech anhaftet, werden zur vollständigen mechanischen Trennung der Teile gemahlen. Dazu eignen sich vorteilhaft Mühlen, die während des Mahlprozesses eine kontinuierliche Abtrennung des zerkleinerten Gutes von zu separierenden Teilen zulassen.

Auch nach diesem Schritt können die abgetrennten Leitbleche (Aluminium) bekannten Wiederverwertungswegen zugeführt werden. Die nach dem Mahlschritt abtrennbare Separatorfolie kann, entweder getrennt thermisch verwertet oder verfahrensunschädlich im nächsten Prozeßschritt mitverarbeitet werden, wenn z. B. noch größere Mengen Kathodenaktivmasse daran haftet.

Wenn bauartbedingt eine Abtrennung des Anodenmaterials von Kathodenmaterial und Separatorfolie nicht möglich ist, so kann dieses verfahrensunschädlich auch bei der weiteren Aufarbeitung des Kathodenmaterials zugegen bleiben.

Alle drei Materialien werden nach der Extraktion zusammen getrocknet, vermahlen und danach die Trägerfolien in bekannter Weise abgetrennt.

In diesem Fall ist es allerdings notwendig, bei der anschließend beschriebenen Hochtemperaturbehandlung ein den optimalen Ausbrand regelnden Sauerstoffhaushalt im Temperofen einzustellen.

### vi) Geregelte Hochtemperaturbehandlung (Temperung) der Kathodenmasse

Die so gewonnene Kathoden- bzw. Elektrodenrohmasse enthält noch Graphit, gegebenenfalls Spezialkohle und, bei nicht vollständiger Abtrennung der Separatorfolie, Bestandteile dieses Materials (in der Regel Polypropylen) sowie geringe, für die weitere Verarbeitung des Materials noch zulässige Mengen Fremdionen, bedingt durch den Charakter des Leitsalzes, geringe Mengen Fluorid, Sulfat, Phosphat oder Borat.

Die pulverisierte trockene Masse wird in einem geeigneten Ofen zur Hochtemperaturbehandlung (z. B. Drehrohrofen, mit Umluft oder Sauerstoffbegasungseinrichtung) einer kontrollierten Hochtemperaturbehandlung unterzogen.

Ein wichtiger Schritt der erfindungsgemäßen Prozedur ist es, diese Masse einer Hochtemperaturbehandlung bei Temperaturen zwischen 300 und 700°C, vorzugsweise zwischen 450 und 600°C, zu unterziehen, und zwar unter solchen Bedingungen, daß in den hierbei wiedergewonnenen Kathodenmaterialien im wesentlichen keine thermischen Zersetzungsprodukte zurückbleiben. Die Umgebungsatmosphäre muß hierbei so geartet sein, daß während der Hochtemperaturbehandlung keine dauerhaft reduzierende Atmosphäre erzeugt wird. Die Regelung des Sauerstoffhaushaltes kann z.B. über eine Umluftzirkulation oder durch zusätzliche Zufuhr eines sauerstoffhaltigen Gases erfolgen. Die Hochtemperaturbehandlung wird über eine Zeitraum von 4 bis 20 Stunden, vorzugsweise von 9 bis 11 Stunden, durchgeführt.

Auf diese Weise gelingt es röntgenographisch phasenreines Kathodenmaterial als wiederaufbereitetes Material zu erzeugen, das geeignet ist, als Zuschlagsstoff bei der Herstellung neuer, der ursprünglichen Bauart entsprechender Lithiumbatterien verwendet zu werden.

Die nachfolgenden Beispiele sollen die Erfindung näher erläutern, ohne sie jedoch zu beschränken.

### Beispiele

### Beispiel 1

Aus einem Lithiumakkumulator (beispielsweise aufgebaut aus einer graphitischen Anode, einem elelktrolyt-durchlässigen Separator und einer Kathode aus einer Aktivmasse aus Lithiumnickelat) wird in der beschriebenen Weise das Elektrodenmaterial isoliert, zerkleinert und danach in trockenem Essigsäureethylester eingeweicht. Nach fünfstündiger Verweilzeit bei Raumtemperatur wird die Anodenmasse mechanisch abgetrennt und Kathodenmasse und Separatorpartikel einer Extraktion mit Essigsäureethylester als Lösungsmittel unterzogen.

Nach achtstündiger Extraktion sind die organischen Elektrolytlösungsmittel (Dimethylcarbonat, Ethylencarbonat, Propylencarbonat), Polyvinylidenfluorid und sonstige Bindemittel, sowie das gelöste Lithiumhexafluorophosphat weitgehend aus der Kathodenmasse herausgelöst.

Essigsäureethylester kann nach bekannten Methoden zurückgewonnen werden. Wenn es die Natur des Leitsalzes erfordert, muß dieses zuvor - z. B. durch kontrollierte Hydrolyse - unschädlich gemacht werden.

Die Kathodenmasse wird getrocknet gemahlen und durch ein Sieb passiert. Danach wird sie einer gesteuerten Hochtemperaturbehandlung unterzogen.

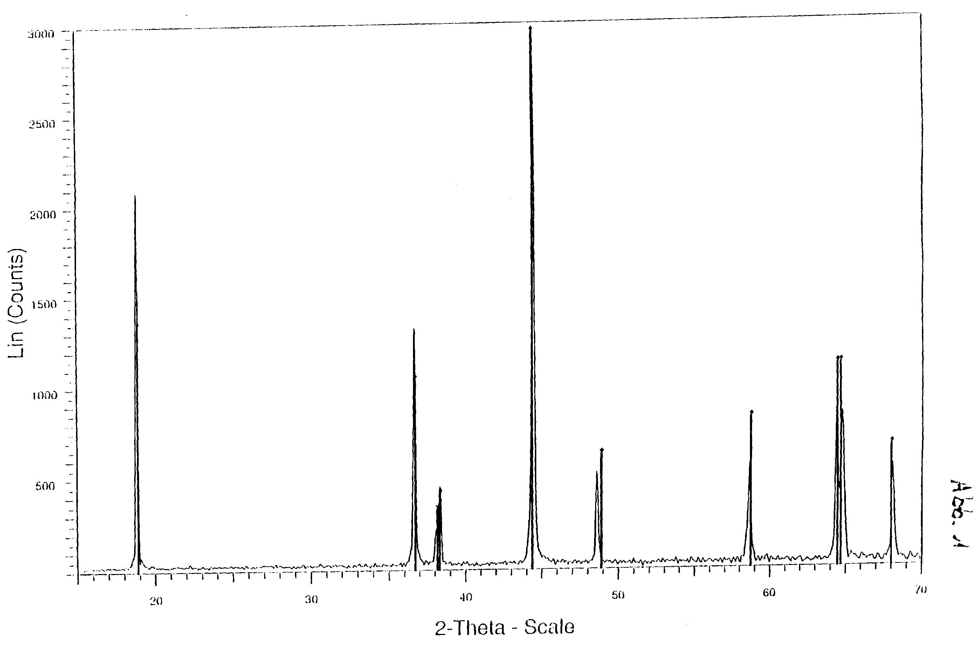

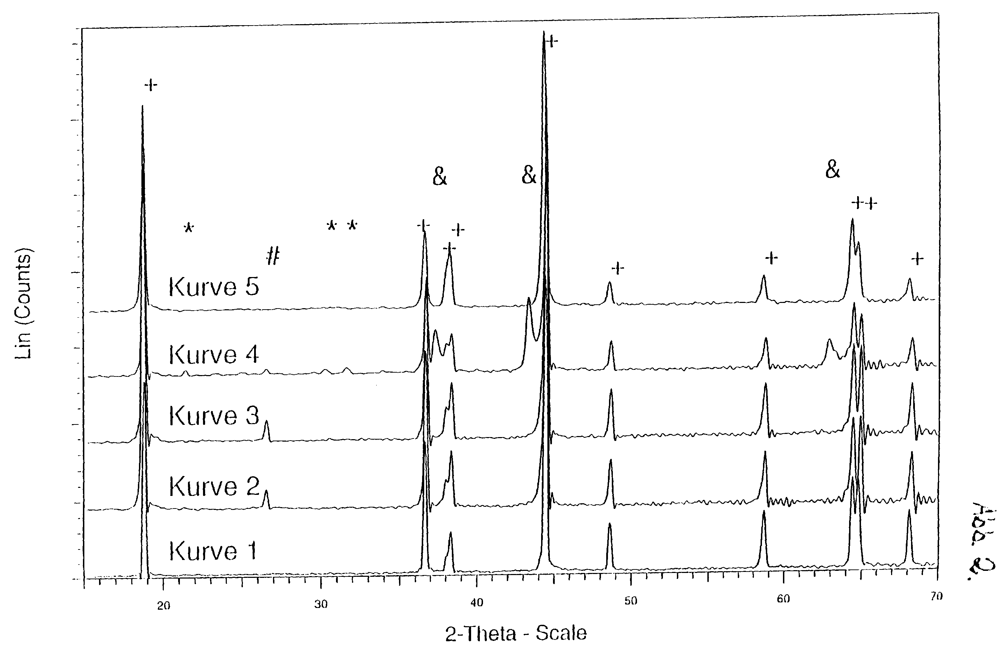

Die Ergebnisse des erfindungsgemäßen Verfahrens und die röntgenographische Charakterisierung der danach wiedergewonnenen Lithiumnickelate sind in den Abbildungen 1 bis 3 dargestellt.

Abbildung 1: zeigt das Röntgenbeugungsdiagramm von kommerziell erhältlichem, für Batterieanwendungen vorgesehenes Lithiumnickelat, darin hineingelegt sind die Linien des Beugungsmusters des in der ICDD-Datenbank unter der Nummer 09-0063 hinterlegten Beugungsdiagramms für die Verbindung LiNiO₂

Abbildung 2: zeigt die Röntgenbeugungsdiagramme wiedergewonnener Kathodenmassen, die bei verschiedenen Ausbrandtemperaturen in einem Kammerofen statisch (ohne Umluftführung) und ohne Sauerstoffanreicherung der Ofenatmosphäre bei verschiedenen Temperaturen (Ausbrenndauer jeweils 4 Stunden) erhalten wurden.
Kurve 1: kommerzielles Lithiumnickelat für Batterieanwendungen
Kurve 2: wiederhergestelltes Material; Ausbrenntemperatur: 300°C

Das mit # gekennzeichnete Signal wird durch den noch nicht völlig ausgebrannten Graphit verursacht.
Kurve 3: wiederhergestelltes Material; Ausbrenntemperatur: 400°C

Das mit # gekennzeichnete Signal wird durch den noch nicht völlig ausgebrannten Graphit verursacht.
Kurve 4: wiederhergestelltes Material; Ausbrenntemperatur: 500°C

Das erhaltene Material ist nicht mehr phasenrein.

Der Kurve unterlegt sind die Linienbeugungsdiagramme für Reststoffe, (# steht für Graphit) und potentielle Zersetzungsprodukte (& steht für Nickeloxid, * steht für Lithiumcarbonat).

Erläuterung zu Kurve 4: Die Hochtemperaturbehandlung bei 500°C bewirkt eine teilweise reduktive Umwandlung des Lithiumnickelates unter Bildung von Nickeloxid. Das dabei freigesetzte Lithium reagiert mit dem aus dem Kohleabbrand stammenden Kohlendioxid unter Bildung von Lithiumcarbonat.
Kurve 5: aus der gebrauchten Batterie wiederhergestelltes Lithiumnickelat; Ausbrenntemperatur 700°C.

Das Produkt ist wieder phasenrein.

Erläuterung zu Kurve 5: Bei der Temperung des wiederhergestellten Produktes bei 700°C findet eine Resynthese des Lithiumnickelates aus Nickeloxid und Lithiumcarbonat unter Eliminierung von Kohlendioxid statt. Der Bildungsweg entspricht dem Ablauf einer bekannten festkörpersynthetischen Route zur Herstellung von Lithiumnickelat.

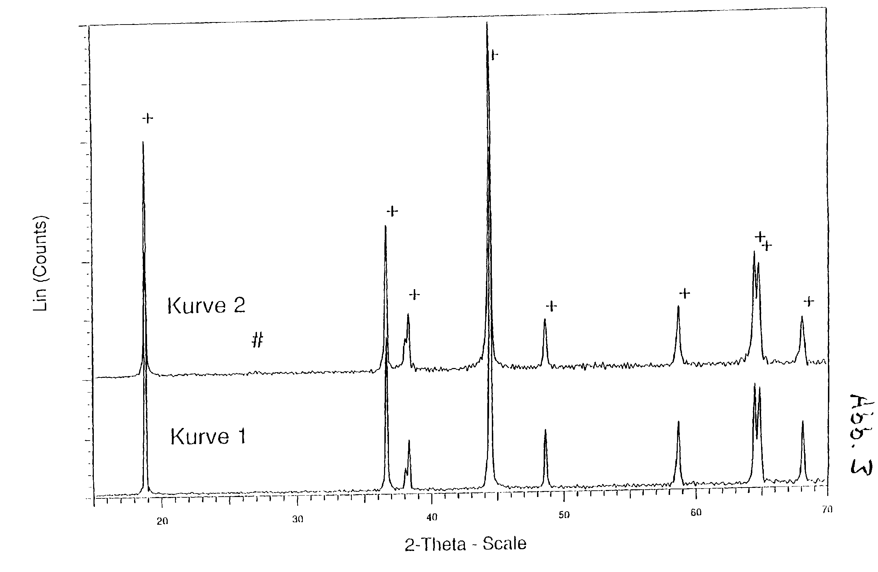

Abbildung 3: Das Diagramm zeigt das Ergebnis eines weiteren Ausbrandversuchs bei 450°C unter Umluftführung, wobei die Ausbranddauer 12 Stunden betrug.
Kurve 1: kommerzielles Lithiumnickelat für Batterieanwendungen. Als Linienbeugungsdiagramm unterlegt sind Graphit (#) und das Lithiumnickelat aus der ICDD-Datenbank (+).
Kurve 2: Röntgenbeugungsdiagramm des aus der gebrauchten Batterie wiederhergestellten, phasenreinen Lithiumnickelats

## Patentansprüche

1. Verfahren, zur Wiedergewinnung von Kathodenmaterialien aus der Verbindungsklasse der Lithium-Übergangsmetall-Mischoxide aus gebrauchten Lithiumbatterien, umfassend die Schritte:
i) Freilegung des Elektrodenverbundes, umfassend mindestens die Anodeneinheit, die Separatorteile, den Elektrolyten und die Kathodeneinheit,
ii) Extraktion des Elektrodenverbundes mit einem organischen Lösungsmittel,
iii)Trocknung des extrahierten Elektrodenpacks,
iv)die mechanische Separation der Anodeneinheit aus dem so behandelten Elektrodenverbund
v) Mahlen und Sichten des nach Schritt iv) erhaltenen restlichen Elektrodenverbundes
vi)Unterziehen der nach Schritt v) erhaltenen Masse einer Hochtemperaturbehandlung bei Temperaturen zwischen 300 und 700°C.

2. Verfahren nach Anspruch 1, dadurch gekennzeichnet, daß ternäre oder multinäre Lithium-Übergangsmetall-Mischoxide eingesetzt werden.

3. Verfahren nach Anspruch 1 oder 2, bei dem Nebenbestandteile und Hilfsstoffe der Batterie mit mechanischen Verfahren abgetrennt werden.

4. Verfahren nach einem der Ansprüche 1 bis 3, wobei als Lösungsmitteln im Schritt ii) Dimethoxyethan, Essigsäureethylester, Dimethylcarbonat, Aceton oder Mischungen hiervon verwendet werden.

5. Verfahren nach einem der Ansprüche 1 bis 4, wobei die Hochtemperaturbehandlung mit geregeltem Sauerstoffhaushalt so geführt wird, daß thermische Zersetzungsprodukte wie Nickeloxid oder Lithiumcarbonat nicht entstehen.

6. Verfahren nach einem der Ansprüche 1 bis 5, wobei die Behandlungstemperatur so geführt wird, daß aus den teilweise gebildeten Zersetzungsprodukten in situ eine Resynthese des gewünschten Kathodenmaterials erfolgt.

7. Verfahren nach einem der Ansprüche 1 bis 6, wobei die Hochtemperaturbehandlung zwischen 450 und 600°C durchgeführt wird.

8. Verfahren nach einem der Ansprüche 1 bis 7 wobei die Hochtemperaturbehandlung über einen Zeitraum von 8 bis 11 Stunden durchgeführt wird.

9. Verfahren nach einem der Ansprüche 1 bis 8, wobei der Sauerstoffhaushalt bei der Hochtemperaturbehandlung geregelt wird.

10. Verfahren nach Anspruch 9, wobei die Regelung des Sauerstoffhaushaltes entweder durch eine Umluftzirkulation oder durch zusätzliche Zufuhr eines sauerstoffhaltigen Gases erfolgt.

11. Verwendung eines nach mindestens einem der voranstehenden Ansprüche hergestellten Kathodenmaterials als Zuschlagsstoff für Kathodenmassen für die Herstellung von Lithiumbatterien
